# EUROPÄISCHE PATENTSCHRIFT

(11) **EP 1 652 651 B1**
(45) Veröffentlichungstag und Bekanntmachung des Hinweises auf die Patenterteilung: **21.01.2009**
(21) Anmeldenummer: 05109426.6
(22) Anmeldetag: 11.10.2005
(51) Int. Cl.: B29C 47/90, B29C 47/34, B29C 47/92

(54) **Vorrichtung und Verfahren zum Führen und Formen eines extrudierten Kunststoffstranges**
Apparatus and method for guiding and forming an extruded plastic wire
Appareil et procédé pour guider et mouler une gaine extrudée en matériau plastique

(30) Priorität: 29.10.2004 DE 102004052972
(43) Veröffentlichungstag der Anmeldung: 03.05.2006
(73) Patentinhaber: Battenfeld Extrusionstechnik GmbH, 32547 Bad Oeynhausen (DE)
(72) Erfinder: Dohmann, Heinrich, 37671 Höxter (DE); Witt, Reinhard, 32547 Bad Oeynhausen (DE); Mickley, Ralf, 33719 Bielefeld (DE); Kreth, Norbert, Dr., 32429 Minden (DE)

(56) Entgegenhaltungen:
- EP-A2- 0 127 565
- WO-A-20/04091891
- DE-A1- 3 610 488
- US-A- 4 650 407

## Beschreibung

Die Erfindung betrifft eine Vorrichtung zum Führen und/oder Formen eines Kunststoffstranges und/oder eines Kunststoffprofiles, vorzugsweise eines Kunststoffrohres, die einen Bereich mit veränderbarem Querschnitt und Mittel zum Verändern des Bereiches mit veränderbarem Querschnitt aufweist, welcher aus einem gewickelten Flachmaterial gebildet wird, sowie ein Verfahren zum Führen und Formen eines Kunststoffstranges zur Erzeugung eines Kunststoffprofiles, bei dem in Abhängigkeit des zu erzeugenden Kunststoffprofiles der Massespalt für den Kunststoffstrang verändert wird.

Gattungsgemäße Vorrichtungen zum Führen und Formen eines Kunststoffstranges sind im Stand der Technik bekannt. So beschreibt beispielsweise die DE 102 13 235 eine Hülse zum Kalibrieren eines Kunststoffrohres, bei der ein geschlitztes Rohr über verschiebbare Stangen im Querschnitt verändert wird, um einen gewünschten Durchmesser eines Rohres zu erzeugen. Derartige Vorrichtungen sind aber nur in einem vorbestimmten Teilbereich im Durchmesser veränderbar, da die Breite des in der Hülse eingebrachten Schlitzes die maximale Veränderung im Umfang vorgibt. Größere Veränderungen im Durchmesser führen zu der Problematik, dass die bereitgestellte Kunststoffmasse, die über den Extruderkopf der Kalibriereinrichtung zugeführt wird, nicht ausreicht bzw. zu groß ist. Folglich ist ein Wechsel des Extruderkopfes erforderlich, um die benötigte Kunststoffmasse bereitzustellen. Weiterhin ist erforderlich, im Anschluß an die Kalibrierung das extrudierte Profil zu führen, bis es abgelängt und in einer entsprechenden Vorrichtung gestapelt und gelagert wird. Bei herkömmlichen Anlagen wird entsprechend des gefertigten Profiles die Führung ausgetauscht.

Eine Massespaltveränderung im Extruderkopf wird in der DE 11 61 412 vorgeschlagen, hier wird der Spalt mittels Schrauben über ein Ringfutter verändert. Eine ähnliche Lösung zeigt die JP05138715, auch hier kann über äquidistant angeordnete Schrauben und einem flexiblen Ringblech die Spaltweite geändert werden. Ein Kalibrierwerkzeug aus Flachmaterial zeigt die WO 2004/091891A1. Hier sind mehrere Blechstreifen lattenzaunmäßig untereinander verbunden, zur Querschnittsänderung wird die Vorrichtung in sich tordiert.

Die **Aufgabe** der vorliegenden Erfindung liegt darin, eine Vorrichtung anzubieten, mit der bei allen drei Anforderungen (Massespalt, Kalibrierung und Profilführung) individuelle Querschnitte realisierbar sind.

Die Lösung der Aufgabe bezüglich der Vorrichtung ist in Verbindung mit dem Oberbegriff des Anspruches 1 dadurch gekennzeichnet, dass das gewickelte Flachmaterial in Teilbereichen überlappt und im überlappenden Bereich das Flachmaterial eng aneinander liegt. Es ist somit möglich, quasi jeden beliebigen Querschnitt abzubilden und somit einen großen Bereich zu verändern. Grenzen werden nur durch die abgewickelte Länge und die Steifigkeit des Flachmateriales gesetzt. Dies kann aber durch die Wahl der Stärke des Flachmateriales und die Materialwahl selbst beeinflusst werden.

Somit kann als gewickeltes Flachmaterial ein dünnes Blech oder mehrere Lagen eines oder unterschiedlicher Materialien gewählt werden. Die Steifigkeit des gewickelten Flachmateriales kann einerseits über die Stärke des dünnen Bleches, beispielsweise kann ein Blech mit einer Materialstärke zwischen 0,2 und 0,8 mm gewählt werden, oder andererseits über die Anzahl der Lagen unterschiedlicher Materialien realisiert werden. Zusätzlich ist es denkbar, als Material Federstahl zu wählen.

Werden dünnere Flachmaterialien gewählt können diese in mehren Lagen übereinander angeordnet werden und somit jede gewünschte Flexibilität im Wickelverhalten zu erreichen. Durch den Einsatz unterschiedlicher Materialien ist zusätzlich das Reibungsverhalten der einzelnen Schichten zueinander beeinflussbar.

Je nach gewünschtem Querschnitt überlappt das gewickelte Flachmaterial in Teilbereichen mehr oder weniger, wobei das Flachmaterial im überlappenden Bereich eng aneinander liegt.

Damit möglichst keine Fließmarkierungen entstehen ist weiterbildungsgemäß vorgesehen, dass das innere Ende des gewickelten Flachmateriales in der Stärke kontinuierlich abnimmt und einen schrägen Verlauf zur Anlagefläche des äußeren Bereiches des Flachmateriales aufweist und somit schraublinienförmig um die Extrusionsachse verläuft.

In einer weiteren Fortbildung ist vorgesehen, das gewickelte Flachmaterial an einer Stirnseite partiell mit angeordneten Laschen zu versehen, damit ein extrudierter Kunststoffstrang einfach in die Vorrichtung gelenkt wird.

Der pastöse Kunststoffstrang wird mittels eines Vakuums an die innere Wandung des gewickelten Flachmaterials gezogen. Damit das Vakuum auf den Kunststoffstrang wirken kann sind im gewickelten Flachmaterial Lochungen vorgesehen, die so angeordnet sind, dass sie im überlappenden Bereich des gewickelten Flachmateriales nicht völlig verdeckt sind, da sonst das Vakuum nicht wirken kann. Diese Lochungen können als Langloch ausgeführt sein und radial um das gewickelte Flachmaterial verlaufen. Es ist aber auch denkbar, die Lochung mit einem veränderlichen Winkel zur Extrusionsachse auszuführen, die Lochung ist dann zum Beispiel sichelförmig.

Damit der Querschnitt verändert werden kann ist vorgesehen, dass die Vorrichtung mit Mitteln zum Verändern des Bereiches mit veränderbarem Querschnitt versehen ist, die als verschiebbare Stangen ausgeführt sind, wie sie in der DE 102 13 235 vorgeschlagen werden. Diese Mittel sind mehrfach um das gewickelte Flachmaterial angeordnet. Selbstverständlich können auch andere Mittel zum Verändern des Querschnittes wie handelsüblich Rohrschellen oder Keilverbindungen zum Einsatz kommen.

Damit bei Verändern des Querschnitts das gewickelte Flachmaterial in eine vorbestimmte Richtung wickelt, ist das gewickelte Flachmaterial mit dem äußeren Ende an einem der Mittel zum Verändern des Bereiches mit veränderbarem Querschnitt befestigt.

Als Alternative wird vorgeschlagen, mindestens eins der Mittel zum Verändern des Bereiches mit veränderbarem Querschnitt mit einer Aussparung zu versehen, damit das Flachmaterial über die Aussparung derart geführt werden kann, um nur einen möglichst geringen Bereich des Flachmaterials zu überlappen.

Es ist aber auch denkbar, ein Flachmaterial so zu fertigen, dass eine Aneinanderreihung verbundener Streifen entsteht, die im gewickelten Zustand einzeln überlappen und somit in der Gänze eine Führungs- und/oder Formvorrichtung bilden. Bei einem derart ausgestalteten Flachmaterial können die Lochungen für das Vakuum entfallen, da durch die mittels der Stege erreichte Beabstandung der Streifen eine ausreichende Fläche für das Vakuum bietet.

Selbstverständlich kann der gewünschte Durchmesser während der Produktion eingestellt werden.

Die Vorrichtung eignet sich zum Einsatz als Kalibrierhülse insbesondere zum Kalibrieren eines Kunststoffrohres. Weiterhin kann die Vorrichtung ein Teil des Extruderrohrkopfes sein oder zum Führen eines Rohres in einem Tank oder am Ende einer Extrusionsline eingesetzt werden. Bei Einsatz in einem Vakuumtank dient die Vorrichtung gleichzeitig als Abdichtelement für das Vakuum oder das Kühlmedium.

Zur **Lösung** der Aufgabe bezüglich des Verfahrens wird in Verbindung mit dem Oberbegriff des Anspruches 10 vorgeschlagen, dass der Bereich mit veränderbarem Querschnitt aus zwei gewickelten Flachmaterialien gebildet wird und diese im Durchmesser vergrößert oder verkleinert werden, wie dies in der Vorrichtung gemäß einem der Ansprüche 1 bis 9 vorgeschlagen wird; erfolgt. Durch dieses Verfahren mit einer derart flexiblen Anpassung des Querschnittes kann eine sonst erforderliche Komponente zum Erstellen eines bestimmten Rohrdurchmessers eingespart werden. Weiterhin bietet dieses Verfahren die Möglichkeit, die Wanddicke und den Durchmesser frei zu wählen und ist zusätzlich eine "schonende" Behandlung der Schmelze.

Die Veränderung des Massespaltes kann über die Steuerung einer Extrusionsanlage gesteuert und/oder geregelt werden und somit in den laufenden Prozeß eingebunden werden.

Die Vorrichtungen und das Verfahren eignen sich besonders zum Einsatz in einer Gesamtanlage und umfassen somit eine Extrusionsanlage mit einem Extruder, einem Extrusionskopf mit einer Massespaltveränderung nach Anspruch 10 und einer Vorrichtung nach einem der Ansprüche 1 bis 9, wobei die Veränderung des Massespaltes im Extruderkopf mittels der Steuerung der Extrusionsanlage mit dem Bereich mit veränderbarem Querschnitt synchronisierbar ist. Die Steuerung stellt folglich alle notwendigen Parameter ein, damit ein gewünschter Querschnitt produziert werden kann.

In den Zeichnungen ist schematisch ein Ausführungsbeispiel als Kalibriervorrichtung dargestellt, es zeigt
- Fig. 1: das gewickelte Blech mit dem Mittel zum Verändern des veränderbaren Querschnittes,
- Fig. 2: eine Seitenansicht der Figur 1,
- Fig. 3: einen vergrößerten Teilbereich der Figur 1,
- Fig. 4: zeigt den veränderbaren Querschnitt im abgewickelten Zustand,
- Fig. 5: eine alternative Ausführung,
- Fig. 6: ein anderes Ausführungsbeispiel zum Einsatz als Teil eines Rohrkopfes und
- Fig. 7: eine alternative Ausführung des veränderbaren Querschnittes

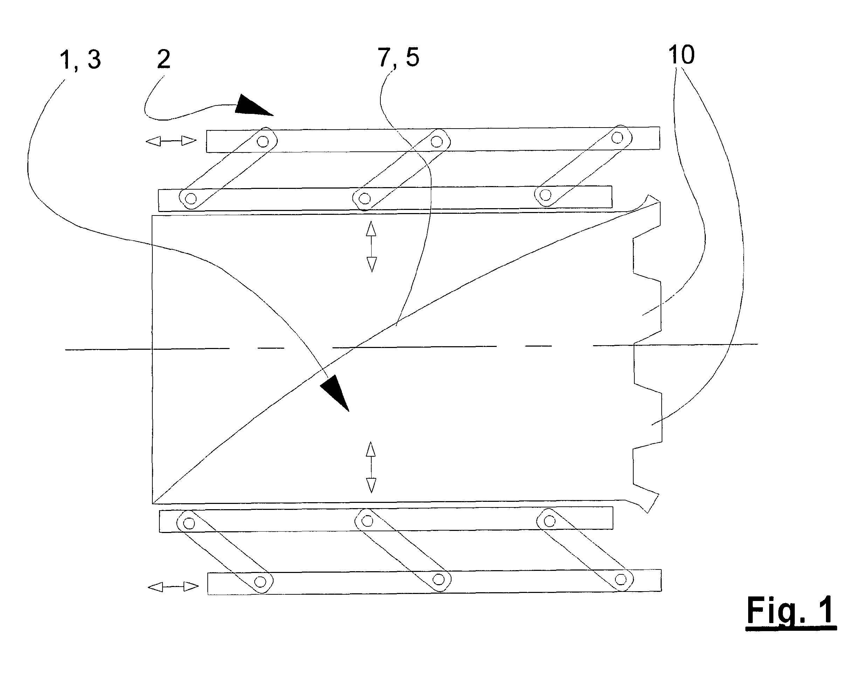

Figur 1 zeigt schematisch ein Ausführungsbeispiel der Erfindung, wenn sie in einer Kalibriereinrichtung zum Einsatz gelangt. Die Vorrichtung zeigt einen Bereich mit veränderbarem Querschnitt 1, der als ein gewickeltes Flachmaterial 3 ausgeführt ist. Um diesen Bereich sind Mittel 2 zum Verändern des Bereiches mit veränderbarem Querschnitt 1 angeordnet. In diesem Ausführungsbeispiel sind dies verschiebbare Stangenelemente. In dieser Schnittdarstellung ist deutlich erkennbar, dass das innere Ende 7 des Flachmaterials 3 einen schrägen Verlauf 5 aufweist, der schraublinienförmig um die Extrusionsachse verläuft, damit Fließmarkierungen verwischt werden und somit weitgehend unsichtbar sind.

Durch Verschieben der Stangenelemente als Mittel zum Verändern des Bereiches mit veränderbarem Querschnitt 1 zueinander (durch die jeweiligen Doppelpfeile verdeutlicht) wird das Flachmaterial 3 stärker oder weniger stark gewickelt (ebenfalls durch die Doppelpfeile dargestellt) und der Querschnitt geweitet oder verengt. Zur Vereinfachung der Führung des Kunststoffstranges sind Laschen 10 an einer Stirnseite des Flachmaterials 3 angeordnet.

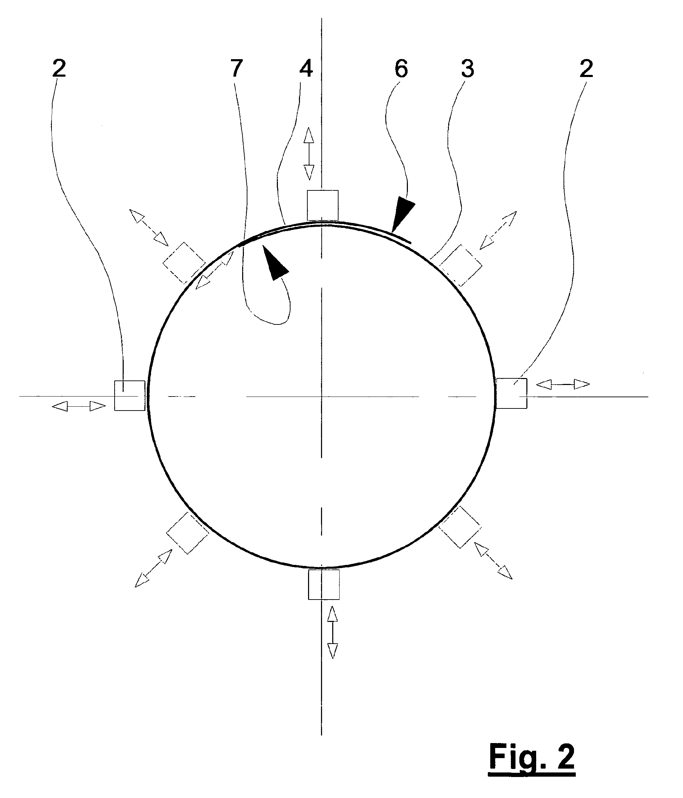

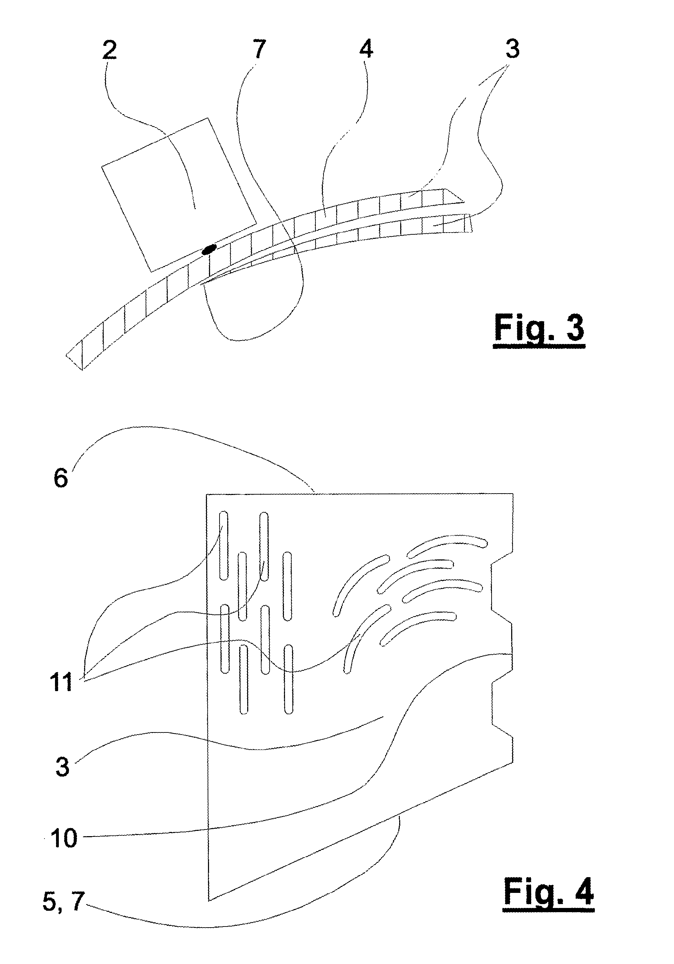

Figur 2 ist eine Seitenansicht von Figur 1 und verdeutlicht die um den Bereich mit veränderbarem Querschnitt 1 angeordneten Mittel 2 zum Verändern. Auch hier ist zu sehen, dass sich das Flachmaterial 3 in Teilbereichen 4 überlappt. In der Einzelheit gemäß Figur 3 ist zu sehen, dass das äußere Ende 6 des Flachmaterials 3 mit dem Mittel 2 zum Verändern des Bereiches mit veränderbarem Querschnitt 1 verbunden ist. Das innere Ende 7 nimmt in seiner Materialstärke kontinuierlich ab, um einen möglichst gleichmäßigen Übergang zu schaffen.

In Figur 4 wird das Flachmaterial 3 im abgewickelten Zustand gezeigt. Erkennbar ist wieder der schräge Verlauf 5 des inneren Bereiches 7 sowie die auf einer Seite angeordneten Laschen 10. Angedeutet wurden die einzubringenden Lochungen 11, die hier als Langloch oder sichelförmig mit veränderbarem Winkel zur Extrusionsachse ausgeführt sind.

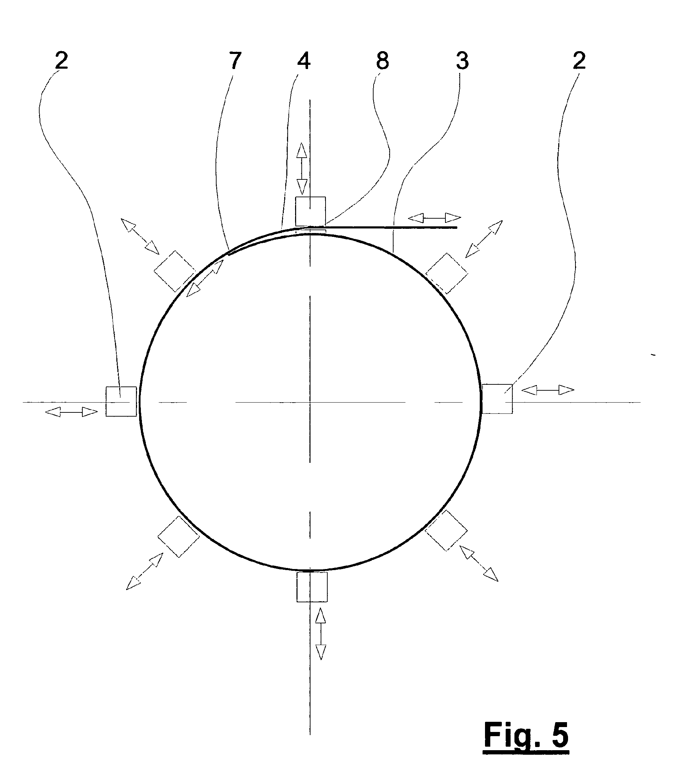

Das Ausführungsbeispiel nach Figur 5 entspricht im Wesentlichen der Figur 2 mit dem Unterschied, dass hier das Flachmaterial 3 durch eine Aussparung 8 im Mittel 2 zum Verändern des veränderbaren Querschnittes 1 geführt wird. Dies hat den Vorteil, dass die Möglichkeit geschaffen wird, je nach Anwendungsfall den überlappenden Bereich 4 so klein wie möglich zu halten.

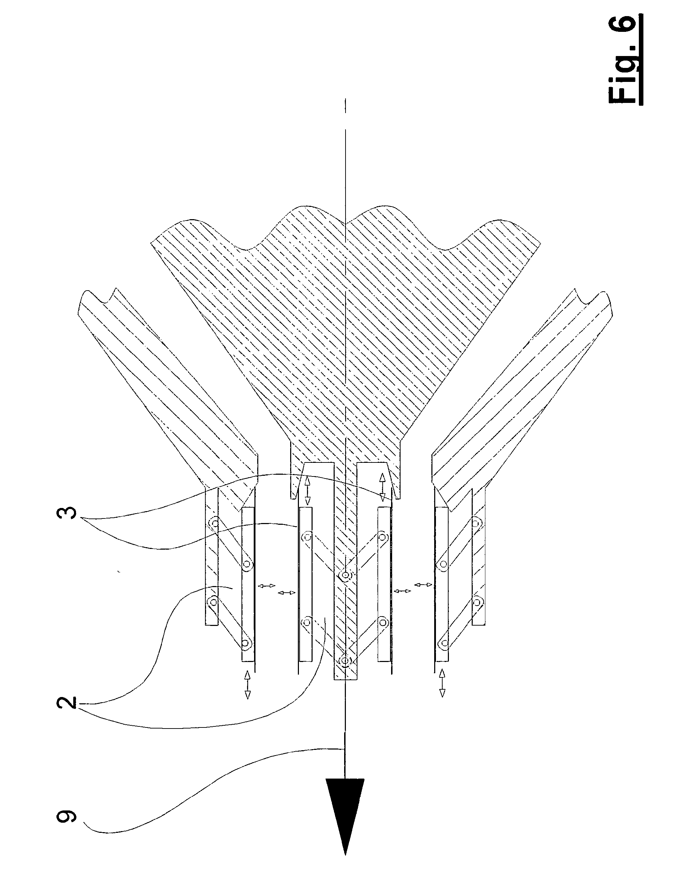

In der Figur 6 wird ein weiteres Beispiel dargestellt, bei dem die erfindungsgemäße Vorrichtung als Teil eines Rohrkopfes dargestellt ist. Ein erstes gewickeltes Flachmaterial bildet einen inneren Querschnitt für den Dorn des Rohrkopfes und ein zweites gewickeltes Flachmaterial bildet einen äußeren Querschnitt für die Hülse des Rohrkopfes. Das Flachmaterial überlappt in Teilbereichen, die Verstellung erfolgt gleichermaßen über die Mittel 2, die sowohl am inneren Querschnitt als auch am äußeren Querschnitt angeordnet sind. Auch sollen die jeweiligen Doppelpfeile die Bewegungsrichtung der Stangen bzw. die Veränderung des Querschnittes verdeutlichen. Bei der Anordnung der Mittel 2 für den äußeren Querschnitt ist darauf zu achten, dass im Bereich des Rohrkopfes das Flachmaterial hervorsteht. Bei entsprechender Ausgestaltung des Ende des Rohrkopfes bildet dieser Überstand eine Abdichtung gegenüber der Schmelze nach außen.

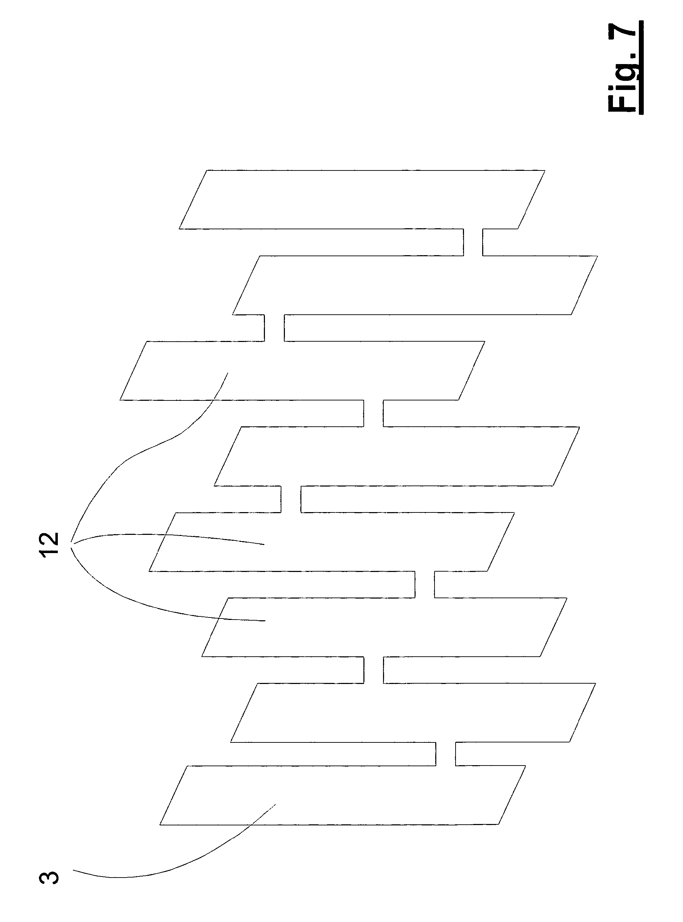

Alternativ zur Ausführung des Flachmaterials 3 gemäß Figur 4, in der Lochungen für das Anlegen des Vakuums eingebracht wurden, kann das Flachmaterial 3 in Form einer Vielzahl von miteinander verbundenen Streifen 12 ausgeführt sein, wie es in Figur 7 dargestellt ist. Diese Ausführung des Flachmaterials 3 kann ebenso gewickelt werden, wobei durch geeignete Ortswahl der zwischen den Streifen 12 angebrachten Stege und damit verbundenen Lage des inneren Endes 7 des Flachmaterials 3 ebenfalls ein schräger Verlauf 5 realisiert werden kann. Jeder einzelne Streifen 12 hat dann einen überlappenden Bereich 4.

### Bezugszeichenliste:

- 1: veränderbarer Querschnitt
- 2: Mittel zum Verändern von 1
- 3: Flachmaterial
- 4: überlappender Bereich von 3
- 5: schräger Verlauf
- 6: äußerer Bereich von 3
- 7: inneres Ende von 3
- 8: Aussparung
- 9: Extrusionsrichtung
- 10: Laschen
- 11: Lochung
- 12: Streifen zur Bildung von 3

## Patentansprüche

1. Vorrichtung zum Führen und Formen eines Kunststoffstranges und/oder eines Kunststoffprofiles, vorzugsweise eines Kunststoffrohres, die einen Bereich mit veränderbarem Querschnitt (1) und Mittel (2) zum Verändern des Bereiches mit veränderbarem Querschnitt (1) aufweist,
wobei der Bereich mit veränderbarem Querschnitt (1) aus einem gewickelten Flachmaterial gebildet wird,
**dadurch gekennzeichnet, dass**
das gewickelte Flachmaterial (3) in Teilbereichen überlappt und im überlappenden Bereich (4) das Flachmaterial (3) eng aneinander liegt.

2. Vorrichtung nach Anspruch 1, **dadurch gekennzeichnet, dass** das gewickelte Flachmaterial (3) aus einem Blech oder mehrer Lagen eines oder unterschiedlicher Materialien besteht.

3. Vorrichtung nach Anspruch 2, **dadurch gekennzeichnet, dass** das innere Ende (7) des gewickelten Flachmateriales (3) in der Stärke kontinuierlich abnimmt.

4. Vorrichtung nach Anspruch 3, **dadurch gekennzeichnet, dass** das innere Ende (7) des Flachmateriales (3) einen schrägen Verlauf (5) zur Anlagefläche des äußeren Bereiches (6) des Flachmateriales (3) aufweist und somit schraublinienförmig um die Extrusionsachse (9) verläuft.

5. Vorrichtung nach Anspruch 4, **dadurch gekennzeichnet, dass** das gewickelte Flachmaterial (3) an einer Stirnseite partiell angeordnete Laschen (10) aufweist.

6. Vorrichtung nach einem der vorigen Ansprüche, **dadurch gekennzeichnet, dass** das gewickelte Flachmaterial (3) Lochungen (11) aufweist, die so angeordnet sind, dass sie im überlappenden Bereich (4) des gewickelten Flachmateriales (3) nicht völlig verdeckt sind, wobei die Lochung (11) als Langloch ausgeführt ist und radial um das gewickelte Flachmaterial (3) verläuft oder einen veränderlichen Winkel zur Extrusionsachse aufweist.

7. Vorrichtung nach mindestens einem der vorigen Ansprüche, **dadurch gekennzeichnet, dass** die Mittel (2) zum Verändern des Bereiches mit veränderbarem Querschnitt (1) verschiebbare Stangen sind, die mehrfach um das gewickelte Flachmaterial (3) angeordnet sind oder das gewickelte Flachmaterial (3) mit dem äußeren Ende (8) an einem der Mittel (2) zum Verändern des Bereiches mit veränderbarem Querschnitt (1) befestigt ist.

8. Vorrichtung nach Anspruch 6 oder 7, **dadurch gekennzeichnet, dass** mindestens eins der Mittel (2) zum Verändern des Bereiches mit veränderbarem Querschnitt (1) eine Aussparung (8) aufweisen und das Flachmaterial (3) über die Aussparung (8) derart geführt werden kann, dass nur ein möglichst geringer Bereich des Flachmaterials (3) überlappt.

9. Vorrichtung nach einem der Ansprüche 1 bis 8, **dadurch gekennzeichnet, dass** die Vorrichtung zum Kalibrieren eines Kunststoffrohres eingesetzt wird oder die Vorrichtung ein Teil des Extruderrohrkopfes ist oder die Vorrichtung zum Führen eins Rohres in einem Tank eingesetzt wird.

10. Verfahren zum Führen und Formen eines Kunststoffstranges zur Erzeugung eines Kunststoffprofiles, vorzugsweise eines Kunststoffrohres, bei dem in Abhängigkeit des zu erzeugenden Kunststoffprofiles der Massespalt für den Kunststoffstrang verändert wird,
wobei die Spaltweite und/oder der Durchmesser eines Extrusionskopfes verändert werden, wobei die Veränderung über einen Bereich mit veränderbarem Querschnitt (1) erfolgt
**dadurch gekennzeichnet, dass**
der Bereich mit veränderbarem Querschnitt (1) aus zwei gewickelten Flachmaterialien (3) gebildet wird und
die im Durchmesser vergrößert oder verkleinert werden.

11. Extrusionsanlage mit einem Extruder, einem Extrusionskopf, **dessen Massespalt** nach Anspruch 10 **veränderbar ist,** und einer Vorrichtung nach einem der Ansprüche 1 bis 9, wobei die Veränderung des Massespaltes im Extruderkopf mittels der Steuerung der Extrusionsanlage mit dem Bereich mit veränderbarem Querschnitt (1) synchronisierbar ist.

## Claims

1. Apparatus for guiding and forming a strand of plastic and/or an extruded plastic section, preferably a plastic pipe, which apparatus has a region of variable cross section (1) and means (2) for varying the region of variable cross section (1), the region of variable cross section (1) being formed from a wound flat material, **characterized in that** the wound flat material (3) overlaps in partial regions and, in the overlapping region (4), the flat material (3) lies in close contact with itself.

2. Apparatus according to Claim 1, **characterized in that** the wound flat material (3) comprises a metal sheet or a number of layers of one material or of different materials.

3. Apparatus according to Claim 2, **characterized in that** the inner end (7) of the wound flat material (3) decreases continuously in thickness.

4. Apparatus according to Claim 3, **characterized in that** the inner end (7) of the flat material (3) has an angled profile (5) with respect to the contact surface of the outer region (6) of the flat material (3) and consequently runs helically around the axis of extrusion (9).

5. Apparatus according to Claim 4, **characterized in that** the wound flat material (3) has tabs (10) partially arranged on one end face.

6. Apparatus according to one of the preceding claims, **characterized in that** the wound flat material (3) has perforations (11), which are arranged in such a way that they are not completely covered in the overlapping region (4) of the wound flat material (3), the perforation (11) being made in the form of an elongated hole and running radially around the wound flat material (3) or having a variable angle in relation to the axis of extrusion.

7. Apparatus according to at least one of the preceding claims, **characterized in that** the means (2) for varying the region of variable cross section (1) are displaceable rods, which are arranged multiply around the wound flat material (3), or the wound flat material (3) is fastened with the outer end (8) to one of the means (2) for varying the region of variable cross section (1).

8. Apparatus according to Claim 6 or 7, **characterized in that** at least one of the means (2) for varying the region of variable cross section (1) has a clearance (8) and the flat material (3) can be guided by way of the clearance (8) in such a manner that only a region of the flat material (3) that is as small as possible overlaps.

9. Apparatus according to one of Claims 1 to 8, **characterized in that** the apparatus is used for calibrating a plastic pipe or the apparatus is part of the pipe extruder head or the apparatus is used for guiding a pipe in a tank.

10. Method for guiding and forming a strand of plastic for producing an extruded plastic section, preferably a plastic pipe, in which method the melt gap for the strand of plastic is varied in dependence on the extruded plastic section to be produced, the gap width and/or the diameter of the extrusion head being varied, the variation taking place by way of a region of variable cross section (1), **characterized in that** the region of variable cross section (1) is formed from two wound flat materials (3) and they are increased or reduced in diameter.

11. Extrusion plant with an extruder, an extrusion head, the melt gap of which according to Claim 10 is variable, and an apparatus according to one of Claims 1 to 9, it being possible for the variation of the melt gap in the extruder head to be synchronized with the region of variable cross section (1) by means of the controller of the extrusion plant.

## Revendications

1. Dispositif pour guider et mouler une gaine en matière plastique et/ou un profilé en matière plastique, de préférence un tube en matière plastique, qui présente une région de section transversale (1) variable et des moyens (2) pour modifier la région de section transversale (1) variable,
la région de section transversale (1) variable étant formée par un matériau plat enroulé,
**caractérisé en ce que**
le matériau plat enroulé (3) recouvre, dans des régions partielles, le matériau plat (3), et dans la région de recouvrement (4), s'applique étroitement contre le matériau plat (3).

2. Dispositif selon la revendication 1, **caractérisé en ce que** le matériau plat enroulé (3) se compose d'une tôle ou de plusieurs couches d'un ou de différents matériaux.

3. Dispositif selon la revendication 2, **caractérisé en ce que** l'extrémité intérieure (7) du matériau plat enroulé (3) a une épaisseur qui diminue de manière continue.

4. Dispositif selon la revendication 3, **caractérisé en ce que** l'extrémité intérieure (7) du matériau plat (3) a une allure oblique (5) vers la surface d'appui de la région extérieure (6) du matériau plat (3) et s'étend ainsi suivant une forme d'hélice autour de l'axe d'extrusion (9).

5. Dispositif selon la revendication 4, **caractérisé en ce que** le matériau plat enroulé (3) présente des pattes (10) disposées en partie au niveau d'un côté frontal.

6. Dispositif selon l'une quelconque des revendications précédentes, **caractérisé en ce que** le matériau plat enroulé (3) présente des perforations (11) qui sont disposées de telle sorte qu'elles ne soient pas complètement recouvertes dans la région de chevauchement (4) du matériau plat enroulé (3), les perforations (11) étant réalisées sous forme de trous oblongs et s'étendant radialement autour du matériau plat enroulé (3) ou présentant un angle variable par rapport à l'axe d'extrusion.

7. Dispositif selon au moins l'une quelconque des revendications précédentes, **caractérisé en ce que** les moyens (2) pour modifier la région de section transversale variable (1) sont des baguettes mobiles qui sont disposées plusieurs fois autour du matériau plat enroulé (3), ou bien le matériau plat enroulé (3) est fixé avec l'extrémité extérieure (8) à l'un des moyens (2) pour modifier la région de section transversale variable (1).

8. Dispositif selon la revendication 6 ou 7, **caractérisé en ce qu'**au moins l'un des moyens (2) pour modifier la région de section transversale variable (1) présente un évidement (8) et le matériau plat (3) peut être guidé sur l'évidement (8) de telle sorte que seulement une région aussi petite que possible chevauche le matériau plat (3).

9. Dispositif selon l'une quelconque des revendications 1 à 8, **caractérisé en ce que** le dispositif est utilisé pour calibrer un tube en matière plastique ou le dispositif fait partie de la tête du tube d'extrusion, ou le dispositif est utilisé pour guider un tube dans un réservoir.

10. Procédé pour guider et mouler une gaine en matière plastique pour produire un profilé en matière plastique, de préférence un tube en matière plastique, dans lequel, en fonction du profilé en matière plastique à produire, on modifie la fente volumique pour la gaine en matière plastique,
la largeur de fente et/ou le diamètre d'une tête d'extrusion étant modifiés, la modification s'effectuant par le biais d'une région de section transversale variable (1),
**caractérisé en ce que**
la région de section transversale variable (1) est formée de deux matériaux plats enroulés (3) dont les diamètres peuvent être agrandis ou réduits.

11. Installation d'extrusion comprenant une extrudeuse, une tête d'extrusion, dont la fente volumique peut être modifiée selon la revendication 10, et un dispositif selon l'une quelconque des revendications 1 à 9, la modification de la fente volumique dans la tête d'extrusion pouvant être synchronisée au moyen de la commande de l'installation d'extrusion avec la région de section transversale variable (1).
